# EUROPEAN PATENT APPLICATION

(11) **EP 4 223 251 A1**
(43) Date of publication of application: **09.08.2023**
(21) Application number: 22829538.2
(22) Date of filing: 10.11.2022
(51) Int. Cl.: A61C 7/28, A61C 7/14, A61C 7/20, A61C 7/30, A61C 7/34

(54) **SLIDING-TYPE SELF-LIGATING ORTHODONTIC BRACKET ASSEMBLY**

(30) Priority: 15.12.2021 KR 20210179295
(71) Applicant: GNI Co., Ltd, Gyeonggi-do 18469 (KR)
(72) Inventor: KIM, Dug Soo, Hwaseong-si, Gyeonggi-do 18447 (KR)
(74) Representative: M. Zardi & Co S.A.
(86) International application number: PCT/KR2022/017609
(87) International publication number: WO 2023/113247

(57) **Abstract**

Disclosed herein is a slide-type self-ligating orthodontic bracket assembly including: a bracket body block (10) including a base portion (11) configured to be attached to the surface of a tooth, and a body portion (12) formed on the base portion 11 and provided with a wire slot (120), into which the arch wire (W) is inserted, between a first wall (130) and a second wall (140); a cover block (20) configured to slide between an open position for opening the wire slot (120) and a closed position for closing the wire slot (120); and a restraining unit configured to restrain the cover block (20) in the closed position and the open position; wherein a guide protrusion (132), both sides of which are flat surfaces parallel to each other, is formed on the flat top surface of the first wall (130).

## Description

### Technical Field

The present invention relates to a slide-type orthodontic bracket assembly, and more particularly to a slide-type self-ligating orthodontic bracket assembly including a body block in which a slot is formed, and a cover block which slides to selectively open and close the slot, wherein the cover block is reliably restrained in an open position where the cover block opens the slot and a closed position where the cover block closes the slot and durability is significantly excellent.

### Background Art

A condition in which the teeth of the lower and upper jaws are not aligned or do not mesh normally is called malocclusion. Malocclusion looks bad in appearance, and also functionally interferes with good chewing of food and adversely affects pronunciation. Furthermore, when malocclusion is left untreated, tooth decay or gum disease may occur, and various other diseases may be caused or aggravated by adversely affecting other parts of the body.

Orthodontics is used to treat such malocclusion. Orthodontics refers to a correction method of correcting the arrangement of teeth by moving the teeth little by little to desired positions by applying continuous force to the irregularly arranged teeth using orthodontic braces. Orthodontic braces include brackets directly attached to surfaces of teeth, and arch wires coupled to the brackets and configured to provide a predetermined pressure or tension to the teeth. For orthodontic correction, the pressure and tension applied to the arch wires and the directions thereof may be adjusted in various ways. It may be possible to gradually move the target teeth based on the adjusted and provided pressure and tension and the adjusted and provided directions.

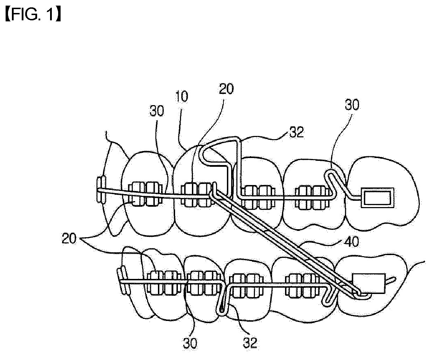

FIG. 1 is a conceptual diagram illustrating a conventional orthodontic method, which shows the overall orthodontic method. Referring to FIG. 1, the orthodontic method that is generally performed today will be described as follows.

First, brackets 20 are attached to surfaces of teeth with a target tooth 10, which is a target for orthodontics, centered thereon.

The brackets 20 are connected by an arch wire 30, and an elastic portion 32 is formed on the arch wire 30 to give continuous tension to the target tooth 10, or the direction of tension is provided using a rubber band 40.

In addition, the elastic portion 32 may be formed by bending a portion of the arch wire 30 in one or various shapes such as a U shape, a P shape, an R shape, and the like. The elastic portion 32 may move the position of the tooth 10 by forming minute tension or torsion between a fixed point and the tooth 10, and is used to change the posture of the tooth 10.

Meanwhile, during orthodontic treatment, the arch wire 30 is connected to fixed points, and the bracket 20 and the tooth 10 are moved minutely by the arch wire 30 providing predetermined pressure and tension.

In this case, the bone tissue of the bone surrounding the tooth 10 is gradually absorbed in the direction in which the tooth 10 moves, and new bone tissue is formed on the opposite side and fills the empty space.

As described above, the process of destruction and generation of bone cells is repeated, and in this process, the target tooth 10 is moved minutely. Orthodontic correction is performed gradually.

Since the orthodontic treatment performed by the above-described orthodontic method is accompanied by the above-described biological treatment, the treatment generally takes a long time, and it is known that the treatment generally requires about two years. The conventional brackets and wires have poor aesthetics. Patients who use orthodontic brackets having poor aesthetics for a long period may experience extreme psychological stress.

In this regard, self-ligating orthodontic bracket assemblies that improve aesthetics and are easy to handle have been conventionally proposed. Among them, there is a self-ligating orthodontic assembly having a structure in which a slot into which an arch wire is inserted is formed in a bracket body made of ceramic, and a ligation sliding cover made of ceramic and having a plate shape slides along the upper sliding surface of the bracket body and selectively open and close the slot into which a wire is inserted. The self-ligating orthodontic assembly includes a pin installed on the bracket body and configured to be extendable/retractable in the radial direction, and a retaining groove formed in the sliding cover to accommodate the upper end of the pin, in order to constrain the ligating sliding cover in the closed position or the open position. The retaining groove includes a guide portion configured to accommodate and guide the pin elastically contracted in the radial direction, and fixing grooves formed at both ends of the guide portion and configured to accommodate the pin, extended in the radial direction by elastic restoration, in the closed position or the open position.

However, the prior art has a structure in which the pair of guide grooves configured to guide the ligation sliding cover are formed on the left and right sides of the upper sliding surface of the bracket body. Accordingly, there are disadvantages in that the strength is inevitably weak due to the limited thickness of the ligation sliding cover and an approximately L-shaped portion where the guide grooves are formed may be easily broken. In addition, a gap needs to be formed between the ligature sliding cover and the guide grooves, so that a problem occurs in that the ligature sliding cover is light and is thus shaken or twisted easily. In particular, the related art has a serious problem in that the inner surface of the retaining groove that is in continuous frictional contact with the pin is easily worn and damaged, and further easily broken. In addition, in the related art, the pin functioning as a spring is made of metal having a high coefficient of thermal expansion, and the inner surface of the retaining groove into which the pin is inserted is made of ceramic having a high coefficient of thermal expansion. Accordingly, depending on the difference in thermal expansion, the gap between the pin and the retaining groove is variable. This prevents the open and closed states from being reliably maintained.

### [Related Art Literature]

### [Patent Documents]

(Patent document 0001) U.S. Patent No. 8,033,824 (registered on November 11, 2011)
(Patent document 0002) Korean Patent No. 10-2160387 (registered on September 21, 2020)

### Disclosure

### Technical Problem

Accordingly, the present invention has been conceived to overcome the above-described problems of the conventional slide-type orthodontic bracket assembly, and an object of the present invention is to provide a slide-type orthodontic bracket assembly that has a simple and compact structure, can be reliably maintained in open and closed states, and, particularly, has significantly excellent durability.

### Technical Solution

According to an aspect of the present invention, there is provided a slide-type self-ligating orthodontic bracket assembly, including: a bracket body block (10) including a base portion (11) configured to be attached to the surface of a tooth, and a body portion (12) formed on the base portion 11 and provided with a wire slot (120), into which the arch wire (W) is inserted, between a first wall (130) and a second wall (140); a cover block (20) configured to slide between an open position for opening the wire slot (120) and a closed position for closing the wire slot (120); and a restraining unit configured to restrain the cover block (20) in the closed position and the open position; wherein a guide protrusion (132), both sides of which are flat surfaces parallel to each other, is formed on the flat top surface of the first wall (130); wherein a guide recess (22), into which the guide protrusion (132) is inserted to slide forward and backward, is formed through the bottom surface of the cover block (20); wherein the restraining unit includes: a tubular spring pin (40) inserted and fixed into the pin insertion hole (139) formed to a certain depth from the flat top surface of the guide protrusion (132), and configured to be elastically deformed or elastically restored in order to contract or extend in the radial direction; and a restraint ring (50) made of metal, inserted and fixed into a fixing groove (222) formed on a ceiling surface inside the guide recess (22), and configured to restrain the cover block (20) in the open position and the closed position while operating in conjunction with the tubular spring pin (40); and wherein the restraint ring (50) includes: a straight guide groove (52) configured to guide the tubular spring pin (40) through straight sliding in a state in which an end of the tubular spring pin (40) contracted radially upward is fitted into the straight guide groove (52); a first restraint groove (54) provided at one end of the straight guide portion (52) to have an inner diameter larger than a width of the straight guide groove portion (52), and configured to restrain movement of the cover block (20) in a closed position in a state in which an end of the tubular spring pin (40) extended in the radial direction is inserted into the first restraint groove (54); and a second restraint groove (56) provided at a remaining end of the straight guide portion (52) to have an inner diameter larger than the width of the straight guide groove portion (52), and configured to restrain movement of the cover block (20) in an open position in a state in which an end of the tubular spring pin (40) extended in the radial direction is inserted into the second restraint groove (56).

According to an embodiment, a front of the guide recess (22) is open and a back of the guide recess (22) is closed; the cover block (20) further includes a pair of cover protrusions (24 and 24) protruding forward to cross the wire slot (120) when it is in the closed position; and the second wall (140) includes an upper protrusion (142) protruding to a position facing a front surface of the cover block (20) in the closed position, and an accommodation depression (144) depressed to accommodate a pair of cover protrusions (132) having crossed the wire slot (120) in the closed position.

According to an embodiment, the fixing groove (222) is formed in a substantially rectangular shape, and the restraining ring (50) is coupled and installed into the fixing groove (222) in an elastically compressed state in such a manner that three points on an outer surface of the first restraint groove (54) and three points on an outer surface of the second restraint groove (56) come into close contact with an inner surface of the fixing groove (50).

### Advantageous Effects

The slide-type orthodontic bracket assembly according to the present invention is advantageous in that the structure thereof is simple and compact, open and closed states can be reliably maintained, and, particularly, durability is significantly excellent.

### Description of Drawings

FIG. 1 is a conceptual diagram illustrating a common orthodontic method;
FIG. 2 is a perspective view showing the slide-type self-ligating orthodontic bracket assembly according to an embodiment of the present invention in a closed position;
FIG. 3 is a perspective view showing the slide-type self-ligating orthodontic bracket assembly according to the embodiment of the present invention in a closed position;

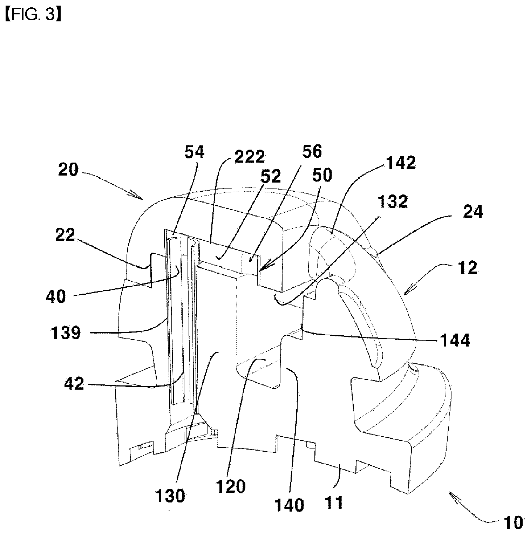

FIG. 3 is a partially sectional perspective view showing the slide-type self-ligating orthodontic bracket assembly according to the embodiment of the present invention in a closed position;

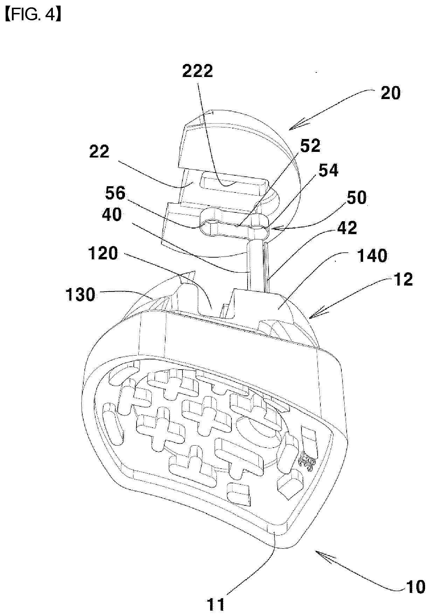

FIG. 4 is a partially exploded upward perspective view showing the slide-type self-ligating orthodontic bracket assembly according to the embodiment of the present invention;

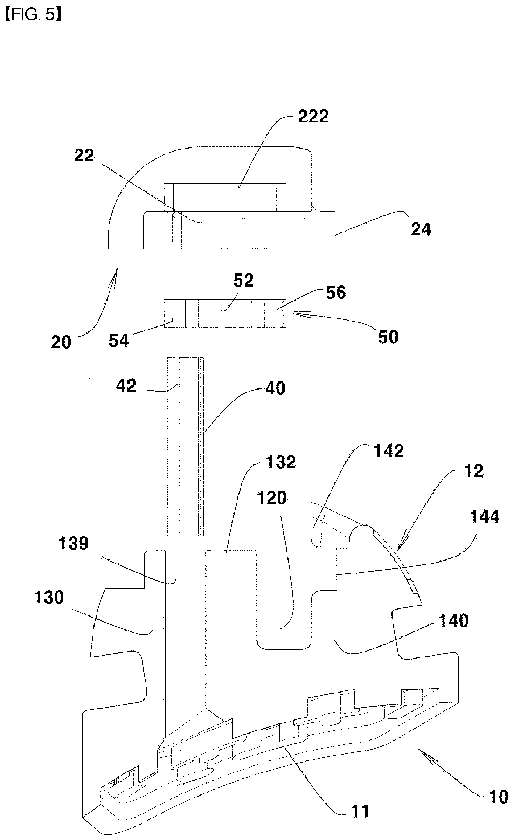

FIG. 5 is a partially exploded upward sectional view of the slide-type self-ligating orthodontic bracket assembly according to the embodiment of the present invention;

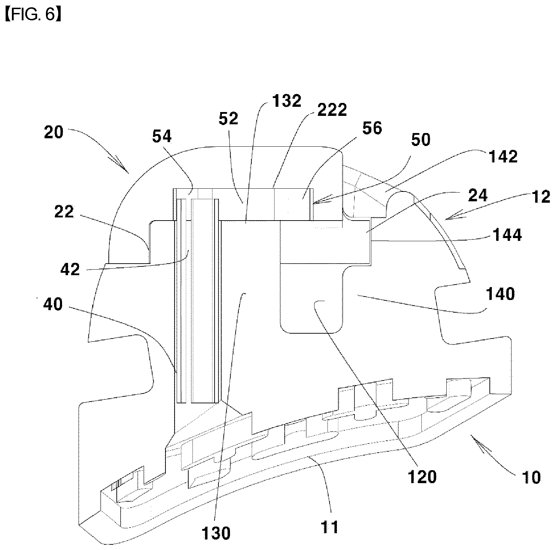

FIG. 6 is a sectional view showing the slide-type self-ligating orthodontic bracket assembly according to the embodiment of the present invention in a closed position;

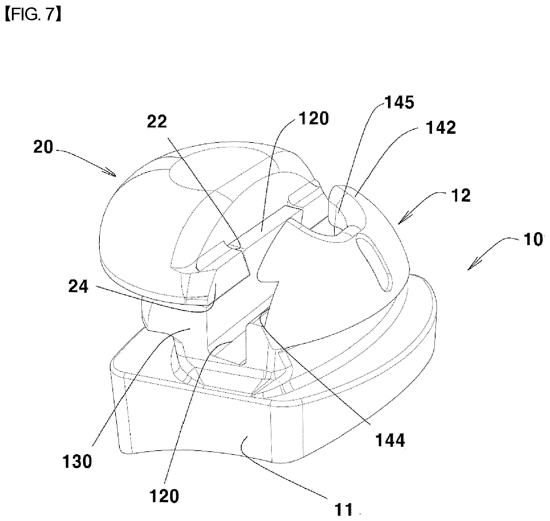

FIG. 7 is a perspective view showing the slide-type self-ligating orthodontic bracket assembly according to the embodiment of the present invention in an open location;

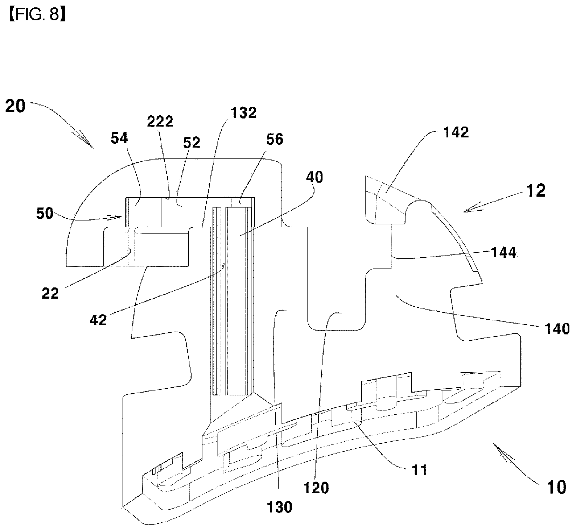

FIG. 8 is a sectional view showing the slide-type self-ligating orthodontic bracket assembly according to the embodiment of the present invention in an open location; and

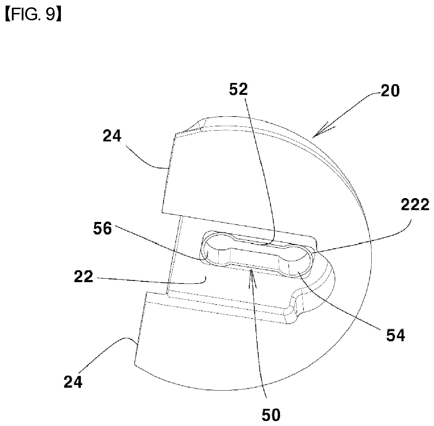

FIG. 9 is a perspective view showing the state in which a cover block and a restraining ring are combined with each other.

### Mode for Invention

The present invention will be described with reference to the accompanying drawings. It is noted that any structure, material, step or feature of any embodiment disclosed herein may constitute another embodiment along with any structure, material, step or other feature of any other embodiment that is part of the invention. It is noted that the detailed description and related drawings do not limit or define the scope of protection of the present invention. The scope of protection of the present invention is defined by the claims.

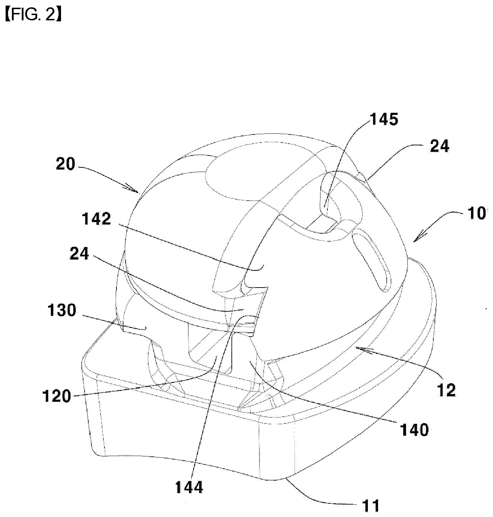

FIG. 1 is a conceptual diagram illustrating a common orthodontic method; FIG. 2 is a perspective view showing the slide-type self-ligating orthodontic bracket assembly according to an embodiment of the present invention in a closed position; FIG. 3 is a perspective view showing the slide-type self-ligating orthodontic bracket assembly according to an embodiment of the present invention in a closed position; FIG. 3 is a partially sectional perspective view showing the slide-type self-ligating orthodontic bracket assembly according to the embodiment of the present invention in a closed position; FIG. 4 is a partially exploded upward perspective view showing the slide-type self-ligating orthodontic bracket assembly according to the embodiment of the present invention; FIG. 5 is a partially exploded upward sectional view of the slide-type self-ligating orthodontic bracket assembly according to the embodiment of the present invention; FIG. 6 is a sectional view showing the slide-type self-ligating orthodontic bracket assembly according to the embodiment of the present invention in a closed position; FIG. 7 is a perspective view showing the slide-type self-ligating orthodontic bracket assembly according to the embodiment of the present invention in an open location; FIG. 8 is a sectional view showing the slide-type self-ligating orthodontic bracket assembly according to the embodiment of the present invention in an open location; and FIG. 9 is a perspective view showing the state in which a cover block and a restraining ring are combined with each other.

As shown in FIGS. 1 to 9, a slide-type self-ligating orthodontic bracket assembly according to an embodiment of the present invention is attached to the surface of a tooth during orthodontic treatment and configured to selectively ligate and release an arch wire W. The slide-type self-ligating orthodontic bracket assembly includes: a bracket body block 10 including a base portion 11 configured to be attached to the surface of a tooth by an adhesive resin (or an adhesive), and a body portion 12 formed on the base portion 11 and provided with a wire slot 120, into which the arch wire W is inserted, between a first wall 130 and a second wall 140; a cover block 20 configured to slide between an open position for opening the wire slot 120 and a closed position for closing the wire slot 120; and a restraining unit configured to restrain the cover block 20 in the closed position and the open position.

In this case, it is preferable that the bracket body block 10 and the cover block 20 are made of a ceramic material. In addition, all of the elements constituting the restraining unit may be formed by bending metal plates so that they have elastic force and elastic restoring force.

The base portion 11 is attached to the surface of a tooth by an adhesive resin (or an adhesive), and has a curved bottom surface corresponding to the surface of the tooth. The body portion 12 is integrated with the base portion 11 above the base portion 11. The body portion 12 includes the first wall 130 and the second wall 140, and the wire slot 120 formed between the first wall 130 and the second wall 140 so that the arch wire W of a square or rectangular cross section passing between the first wall 130 and the second wall 140 can be inserted and seated therein.

A guide protrusion 132, both sides of which are flat surfaces parallel to each other, is formed on the flat top surface of the first wall 130. The front end of the guide protrusion 132 preferably has a flat surface coincident with a straight edge where the first wall 130 and the wire slot 120 meet. The rear end of the guide protrusion 132 has a curved surface.

In addition, a guide recess 22, into which the guide protrusion 132 is inserted to slide forward and backward, is formed through the bottom surface of the cover block 20. The front of the guide recess 22 is open and the back of the guide recess 22 is closed. Furthermore, the cover block 20 further includes a pair of cover protrusions 24 and 24 protruding forward to cross (or pass) the wire slot 120 when it is in the closed position. The guide recess 22 extends from the bottom surface of the cover block 200 to a space between the pair of cover protrusions 24 and 24.

In addition, the second wall 140 includes an upper protrusion 142 protruding to a position facing the front surface of the cover block 20 in the closed position, and an accommodation depression 144 depressed to accommodate a pair of cover protrusions 132 having crossed the wire slot 120 in the closed position. In addition, a finger hole 145 is formed at the center of the front end of the upper protrusion 142 so that the cover block 20 can be easily manipulated by inserting a finger.

Due to the above-described configuration, the cover block 20 may slide forward and backward without shaking in the state in which the guide protrusion 142 is fitted into the guide recess 22. Accordingly, the cover block 20 may slide forward and backward between the open position for opening the wire slot 120 shown in FIGS. 7 and 8 and the closed position for closing the wire slot 120 shown in FIGS. 2, 3 and 6.

Meanwhile, the restraining unit includes: a tubular spring pin 40 inserted and fixed into the pin insertion hole 139 formed to a certain depth from the flat top surface of the guide protrusion 132, and configured to be elastically deformed or elastically restored in order to contract or extend in the radial direction; and a restraint ring 50 made of metal, inserted and fixed into a fixing groove 222 formed on a ceiling surface inside the guide recess 22, and configured to restrain the cover block 20 in the open position and the closed position while operating in conjunction with the tubular spring pin 40.

The restraint ring 50 includes: a straight guide groove 52 configured to guide the tubular spring pin 40 through straight sliding in the state in which the end of the tubular spring pin 40 contracted radially upward is fitted into the straight guide groove 52; a first restraint groove 54 provided at one end of the straight guide portion 52 to have an inner diameter larger than the width of the straight guide groove portion 52, and configured to restrain the movement of the cover block 20 in a closed position in the state in which an end of the tubular spring pin 40 extended in the radial direction is inserted into the first restraint groove 54; and a second restraint groove 56 provided at the other end of the straight guide portion 52 to have an inner diameter larger than the width of the straight guide groove portion 52, and configured to restrain the movement of the cover block 20 in an open position in the state in which an end of the tubular spring pin 40 extended in the radial direction is inserted into the second restraint groove 56. In this case, the length by which the tubular spring pin 40 protrudes upward is determined such that the end of the tubular spring pin 40 does not come into contact with the inner ceiling surface of the fixing groove 222.

As described above, the metal tubular spring pin 40, which can be elastically contracted or elastically restored in the radial direction while being made of a metallic material, comes into contact while being constrained to the first restraint groove 54 and second restraint groove portion 54 of the restraining ring 50 made of the same metal material, or comes into frictional contact with the straight guide portion 52. Accordingly, despite continuous frictional contact between the retaining ring 50 and the tubular spring pin 40, wear or damage to the retaining ring 50 or the tubular spring pin 40 rarely occurs. In addition, since the restraining ring 50 and the tubular spring pin 40 are made of a metal material having substantially the same coefficient of thermal expansion. Accordingly, there is little difference in the amount of deformation attributable to temperature between the restraining ring 50 and the tubular spring pin 40. Therefore, reliable closed and open states are guaranteed regardless of changes in temperature.

The fixing groove 222 is formed in a substantially rectangular shape. The restraining ring 50 is preferably installed in an elastically compressed state in such a manner that three points on the outer surface of the first restraint groove 54 and three points on the outer surface of the second restraint groove 56 come into close contact with the inner surface of the fixing groove 50 and the remaining portions are spaced apart therefrom.

The tubular spring pin 40 is preferably manufactured by bending a metal plate to have a hollow cylindrical shape, and the gap between both side ends of the bent metal plate remains as a long slit 42. Furthermore, the restraining ring 50 is preferably formed by bending a metal plate so that the straight guide portion 52, the first restraint portion 54, and the second restraint portion 54 are formed.

Although the specific embodiments of the present invention have been described in detail above, the present invention is not limited thereto. The present invention may be practiced in the form of various modifications by those having ordinary skill in the art to which the present invention pertains. Such variations are included within the scope of the present invention.

**[Description of Reference Numerals]**

| | | | |
|---|---|---|---|
| 10: | bracket body block | 11: | base portion |
| 12: | body portion | 120: | wire slot |
| 130: | first wall | 132: | guide protrusion |
| 20: | cover block | 22: | guide recess |
| 40: | tubular spring pin | 50: | restraint ring |
| 52: | straight guide portion | 54: | first restraint groove |
| 56: | second restraint groove | | |

## Claims

1. A slide-type self-ligating orthodontic bracket assembly, comprising:
a bracket body block (10) including a base portion (11) configured to be attached to the surface of a tooth, and a body portion (12) formed on the base portion 11 and provided with a wire slot (120), into which the arch wire (W) is inserted, between a first wall (130) and a second wall (140);
a cover block (20) configured to slide between an open position for opening the wire slot (120) and a closed position for closing the wire slot (120); and
a restraining unit configured to restrain the cover block (20) in the closed position and the open position;
wherein a guide protrusion (132), both sides of which are flat surfaces parallel to each other, is formed on a flat top surface of the first wall (130);
wherein a guide recess (22), into which the guide protrusion (132) is inserted to slide forward and backward, is formed through a bottom surface of the cover block (20);
wherein the restraining unit comprises:
a tubular spring pin (40) inserted and fixed into the pin insertion hole (139) formed to a certain depth from the flat top surface of the guide protrusion (132), and configured to be elastically deformed or elastically restored in order to contract or extend in the radial direction; and
a restraint ring (50) made of metal, inserted and fixed into a fixing groove (222) formed on a ceiling surface inside the guide recess (22), and configured to restrain the cover block (20) in the open position and the closed position while operating in conjunction with the tubular spring pin (40); and
wherein the restraint ring (50) comprises: a straight guide groove (52) configured to guide the tubular spring pin (40) through straight sliding in a state in which an end of the tubular spring pin (40) contracted radially upward is fitted into the straight guide groove (52); a first restraint groove (54) provided at one end of the straight guide portion (52) to have an inner diameter larger than a width of the straight guide groove portion (52), and configured to restrain movement of the cover block (20) in a closed position in a state in which an end of the tubular spring pin (40) extended in the radial direction is inserted into the first restraint groove (54); and a second restraint groove (56) provided at a remaining end of the straight guide portion (52) to have an inner diameter larger than the width of the straight guide groove portion (52), and configured to restrain movement of the cover block (20) in an open position in a state in which an end of the tubular spring pin (40) extended in the radial direction is inserted into the second restraint groove (56).

2. The slide-type self-ligating orthodontic bracket assembly of claim 1, wherein:
a front of the guide recess (22) is open and a back of the guide recess (22) is closed;
the cover block (20) further includes a pair of cover protrusions (24 and 24) protruding forward to cross the wire slot (120) when it is in the closed position; and
the second wall (140) includes an upper protrusion (142) protruding to a position facing a front surface of the cover block (20) in the closed position, and an accommodation depression (144) depressed to accommodate a pair of cover protrusions (132) having crossed the wire slot (120) in the closed position.

3. The slide-type self-ligating orthodontic bracket assembly of claim 2, wherein the fixing groove (222) is formed in a substantially rectangular shape, and the restraining ring (50) is coupled and installed into the fixing groove (222) in an elastically compressed state in such a manner that three points on an outer surface of the first restraint groove (54) and three points on an outer surface of the second restraint groove (56) come into close contact with an inner surface of the fixing groove (50).
